# EUROPEAN PATENT SPECIFICATION

(11) **EP 1 496 629 B1**
(45) Date of publication and mention of the grant of the patent: **24.01.2007**
(21) Application number: 04016245.5
(22) Date of filing: 09.07.2004
(51) Int. Cl.: H04B 10/08

(54) **Light transmitter-receiver apparatus**
Lichtempfangs- und -sendeeinrichtung
Dispositif pour transmettre et recevoir de la lumière

(30) Priority: 10.07.2003 JP 2003194867
(43) Date of publication of application: 12.01.2005
(73) Proprietor: Pioneer Corporation, Meguro-ku, Tokyo (JP)
(72) Inventor: Noguchi, Ryoji, Ohta-ku Tokyo (JP); Nohara, Manabu, Ohta-ku Tokyo (JP); Ishitoya, Koichi, Ohta-ku Tokyo (JP)
(74) Representative: Betten & Resch

(56) References cited:
- EP-A- 0 437 162
- WO-A-99/13601
- GB-A- 2 369 509
- US-A- 4 994 675
- US-A- 5 491 572
- US-A1- 2002 149 810

## Description

### BACKGROUND OF THE INVENTION

### 1. Field of the Invention

The present invention relates to a light transmitter-receiver apparatus or the like which is to exchange light signals through the optical fiber cable, for example.

### 2. Description of the Related Art

Recently, owing to the lowered price of optical fiber cables and the advancement of optical transmission technology, the light transmitter-receiver apparatus utilizing the optical fiber cable incorporated in the usual audio-visual apparatus have been spreading broadly into the ordinary households.

However, if such a trouble as optical fiber cable breakage or optical connector detachment, takes place during using such a light transmitter-receiver apparatus, the beam of light is to be released to the outside of the light transmitter-receiver apparatus.

In order to prevent such a disadvantage, conventionally there is disclosed in the publication of Japanese Patent Kokai No. 2000-131566 (Patent Document 1) a technique that a light shutter is provided in a light output part of a light transmitter-receiver apparatus so that, when the optical connector or optical fiber cable is detached from the apparatus, the shutter can be used to block the optical beam. Meanwhile, the publication of Japanese Patent Kokai No. 2003-32189 (Patent Document 2) discloses a technique that the light signal from the opposite-sided apparatus is determined in reception level so that, when the reception level goes lower than a predetermined threshold, determination is made as an occurrence of optical fiber cable breakage, optical connector detachment or the like, thereby reducing the power at the light output part.

However, the light shutter requiring a mechanical structure incurs a complication in apparatus structure. Furthermore, the increase of failures caused by mechanical operation is not to be ignored. On the other hand, for determining the level of light reception, the unit structure becomes similarly complicated because it separately requires an element or circuit for determining the level of light reception. Meanwhile, the level of light reception varies depending upon an attenuation rate of an optical fiber cable used as a transmission line and a dynamic range of a light signal to be transmitted. Thus, there is a problem that malfunction is incurred frequently at a certain threshold for determining a reception-light level.

The present invention has been made for solving the foregoing problem, and it is an object thereof to provide a light transmitter-receiver apparatus capable of reducing the output of light when detecting an occurrence of a trouble on a light transmission line, for example.

In US patent 5,491,572, a method and system for detecting trouble occurring in a single-fiber two-way optical transmission system is disclosed containing first and second optical terminal stations connected to each other through at least one two-way single optical fiber. A first abnormality in a first optical signal received at the first optical terminal station is detected. A notice that the first optical terminal station will stop transmission of optical signals, is transmitted from the first optical terminal station to the second optical terminal station after occurrence of the first abnormality is detected. Transmission of optical signals from the first optical terminal station is stopped after transmission of the notice. An abnormality in an optical signal next received at the first optical terminal station is detected after the stopping of the transmission of optical signals from the first optical terminal station.

In EP-A-0437162, an optical fiber link control safety system is disclosed comprising means for detecting the loss of light on a fiber optic link including means for outputting at least two independent loss of light signals, and control means coupled to the means for detecting for controlling the radiant energy output by an optical transmitter based at least in part on the values of the independent loss of light signals.

In US patent 4,994,675, a method and apparatus for checking continuity of fiber optic links from source to receiver before enabling the source delivers full power so a to thereby prevent eye damage to personnel and provide a supervisory signal to the system user that the link elements are intact and functioning. The apparatus includes a transmitter, a receiver and a detector for detecting that an optical transmission between the transmitter and receiver can be effected.

### SUMMARY OF THE INVENTION

A light transmitter-receiver apparatus according to the present invention is a light transmitter-receiver apparatus as defined in independent claim 1 including a light transmitter section for converting a transmission electric signal into a light signal and sending it through an optical fiber, a light receiver section for converting a light input signal arriving through the optical fiber into a reception electric signal, and an output control section for controlling an output level at the light transmitter section depending upon a state of the reception electric signal, the light transmitter-receiver apparatus being characterized in that: the output control section includes an abnormality detecting means for detecting a signal abnormality occurring in the reception electric signal and generating an abnormality detection signal; and an output level adjusting means for adjusting a magnitude of the output level depending upon the abnormality detection signal.

### BRIEF DESCRIPTION OF THE DRAWINGS

Fig. 1 is a block diagram showing an arrangement of a light transmitter-receiver apparatus in a first embodiment of the present invention;
Fig. 2 is a flowchart showing an operation of the light transmitter-receiver apparatus shown in Fig. 1;
Fig. 3 is a block diagram showing an arrangement of a light transmitter-receiver apparatus in a second embodiment of the invention, and an optical transmission system using the same apparatus;
Fig. 4 is a figure explaining a transmission data format in the optical transmission system of Fig. 3;
Fig. 5 is a block diagram showing an arrangement of a light transmitter-receiver apparatus in a third embodiment of the invention;
Fig. 6 is a flowchart showing an operation of the light transmitter-receiver apparatus shown in Fig. 5;
Fig. 7 is a block diagram showing an arrangement of a light transmitter-receiver apparatus in a fourth embodiment of the invention, and an optical transmission system using the same apparatus;
Fig. 8 is a timing chart showing a relationship between a error rate change characteristic and an occurrence timing of a light-power reducing signal, in the optical transmission system of Fig. 7;
Fig. 9 is a block diagram showing an arrangement of a light transmitter-receiver apparatus in a fifth embodiment of the invention;
Fig. 10 is a flowchart showing an operation of the light transmitter-receiver apparatus shown in Fig. 9;
Fig. 11 is a block diagram showing an arrangement of a light transmitter-receiver apparatus in a sixth embodiment of the invention, and an optical transmission system using the same apparatus; and
Fig. 12 is a block diagram showing an arrangement of a light transmitter-receiver apparatus in a seventh embodiment of the invention, and an optical transmission system using the same apparatus.

### DETAILED DESCRIPTION OF THE INVENTION

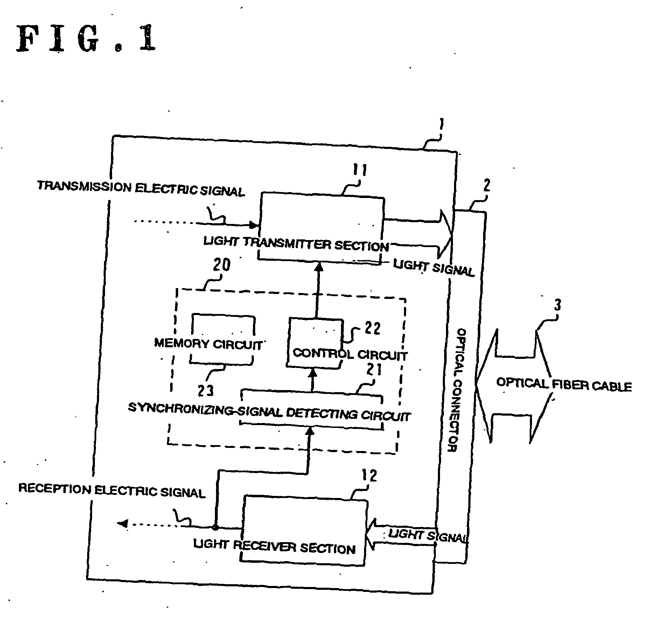

A light transmitter-receiver apparatus 1, according to a first embodiment of the present invention shown in Fig. 1, is built in so-called an audio/visual-source supply control unit (hereinafter, referred merely to as "AV control unit"), such as a video disk reproducer or a digital broadcast receiver, for example. The light transmitter-receiver apparatus 1, incorporated in the AV control unit, is to be connected with another light transmitter-receiver apparatus 1 built in an audio/visual terminal unit (hereinafter, referred merely to as "AV terminal unit") such as a wall-mounted television set or a large-screen display panel through an optical connector 2 and optical fiber cable 3.

In Fig. 1, a light transmitter section 11 is configured, for example, with an electro-optical converter element such as a laser diode, an oscillator circuit for the same element, and a peripheral circuit including a control circuit therefor. Namely, the light transmitter section 11 is a section to change into a transmission light signal a transmission electric signal, such as a video or synchronizing signal, supplied from a transmission control section (not shown) of the light transmitter-receiver apparatus 1.

A light receiver section 12 is configured, for example, with a photoelectric converter element, such as a phototransistor or photodiode, and a circuit for demodulating a reception signal converted into an electric signal by those elements. The reception electric signal demodulated by the light receiver section 12 is supplied to a reception control section (not shown) of the light transmitter-receiver apparatus 1 and to a synchronizing-signal detecting circuit 21, referred later. Note that the reception electric signal includes a status monitor signal of the AV terminal unit, and various request signals of from the AV terminal unit to the AV control unit.

An output control section 20 is a circuit for generating an output control signal that is to control the light signal output sent from the light transmitter section 11 according to a status of the reception electric signal demodulated by the light receiver section 12. This is configured mainly with a synchronizing-signal detecting circuit 21 as abnormality detecting means, a control circuit 22 as output level adjusting means and a memory circuit 23.

The synchronizing-signal detecting circuit 21 is a circuit for detecting a synchronizing signal contained in the reception electric signal demodulated by the light receiver section 12, to notify the control circuit 22 of the detection status of a synchronizing signal. The control circuit 22 is configured mainly with a microcomputer and a peripheral circuit thereof, to administer the control over the entire of the output control section 20. The memory circuit 23 is configured with a storing element such as a RAM and a ROM, and a peripheral circuit thereof. The ROM of the memory circuit 23 is stored with various programs for defining the process operations of the output control section 20. The microcomputer of the control circuit 22 executes, step by step, the program synchronously with a clock signal incorporated, thereby executing the various operation processes in the output control section 20. Meanwhile, the RAM of the memory circuit 23 is used as an area to temporarily store various flags and operation values, in the course of such an operation process.

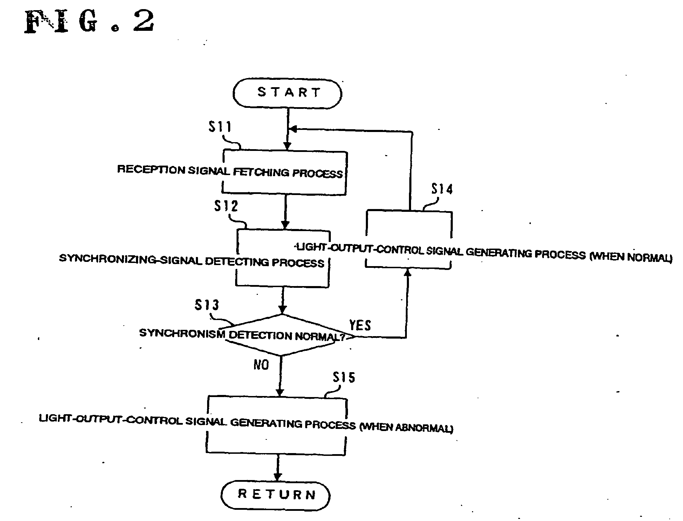

Now, the process operation in the output control section 20 is explained with reference to a flowchart of Fig. 2. The process shown in the Fig. 2 flowchart may be started up repeatedly every time during operation of the light transmitter-receiver apparatus 1. Otherwise, it may be started up at a predetermined time interval by a timer (not shown) built in the control circuit 22. It is needless to say that the processing program shown in the flowchart is previously stored in a predetermined domain of the ROM of the memory circuit 23.

In case the processing program shown in the Fig. 2 flowchart is started up at a predetermined timing, at first the synchronizing-signal detecting circuit 21 at step S11 fetches a demodulated reception electric signal outputted from the light receiver section 12. In the next step S12, it executes a detection process of a synchronizing signal contained in the reception electric signal.

The synchronizing-signal detection process at the step S12 is dependent on the scheme of signal transmission between the AV control unit and the AV terminal unit that are actually in use. Various methods of detection process can be employed in accordance with such a signal transmission scheme. For example, a particular bit pattern may be defined as a synchronizing signal so that a synchronizing signal can be detected by retrieving such a bit pattern from a serial bit string of the demodulated reception electric signal. Otherwise, a synchronizing clock signal at a particular frequency may be superposed over the reception signal so that a synchronizing signal can be detected by detecting such a synchronizing clock signal.

Thereafter, it is determined at step S13 whether or not the synchronizing signal has been normally detected at the step S12.

The determination, as to whether or not the synchronizing signal is normally detected, i.e. whether the frequency of missing synchronizing signals is to constitute a failure in a reception process by the light transmitter-receiver apparatus, may be made by providing a timer having a predetermined time length, for example whereby determination is made by whether or not synchronizing signals are detected a predetermined number of times or more or for a predetermined time or longer within such a time. Otherwise, determination may be by whether or not detection signals representative of missing synchronizing signals are detected a predetermined number of times or more within a unit time.

In the case of a determination that the synchronizing signal is normally detected at step S13, the control circuit 22 proceeds to step S14 where it generates an output control signal for maintaining the optical-signal transmission power from the light transmitter section 11 at a predetermined value and supplies it to the light transmitter section 11. Then, the process returns to the step S11, to repeat the above-explained process. Incidentally, in order to avoid the bias toward the operation with such repeated operation, the process of the control circuit 22 may be once returned to the main program (not shown) in the course of the repetition loop to the step S11 in the flowchart of Fig. 2.

On the other hand, in the case of a determination at the step S13 that synchronizing signal detection is not normally done, it means that a light signal is not normally arrived at the light receiver section 12 from the counterpart apparatus. Namely, in this case, there is a possibility that a certain trouble occurs in the light transmission system at its optical connector 2 or optical fiber cable 3.

For this reason, the control circuit 22 moves to step S15 where it generates an output control signal for reducing the output of a light signal to be sent from the light transmitter section 11 and supplies it to the light transmitter section 11, thus ending the process shown in Fig. 2.

Incidentally, this embodiment exemplified the case for effecting simple output control that it is determined whether a synchronizing signal is normally detected or not, to thereby reduce the output of a light signal to be sent from the light transmitter section 11. However, the embodiment of the invention is not limited to that case.

For example, by quantitatively grasping a detection state of a synchronizing signal due to the number of times of detections of synchronizing signals or the continuing time ratio of synchronism detection within the foregoing predetermined time, the output of a light signal to be sent at the light transmitter section 11 may be reduced stepwise depending upon a value representative of such a detection state. Otherwise, by previously defining the output value of a light signal to be sent from the light transmitter section 11 as a predetermined function having as a variable a value representative of a detection state, the output of a light signal may be adjusted continuously in accordance with the variable.

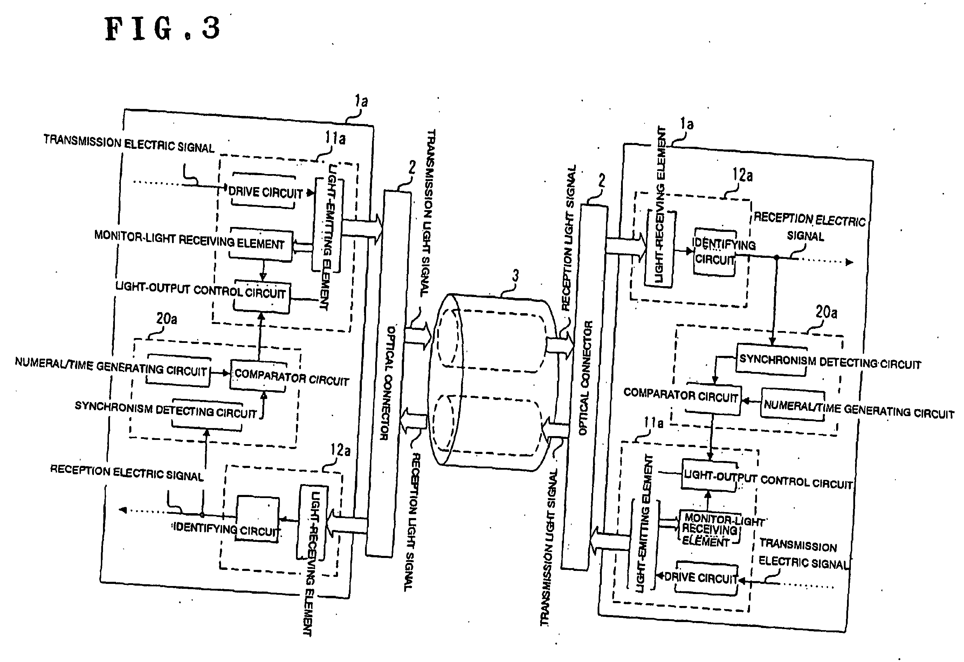

Now, explanation is made on a second embodiment of the invention shown in Fig. 3. This embodiment shows a case that the light transmitter-receiver apparatus explained in the first embodiment is used opposite by being mounted on a DVD recorder or on a wall-mounted television set. In the following, explained is a light transmitter-receiver apparatus 1a shown in Fig. 3.

The light transmitter-receiver apparatus 1a is configured mainly with a light transmitter section 11a, a light receiver section 12a, and a synchronizing-signal determining section 20a as abnormality detecting means and output-level adjusting means. Meanwhile, each of two light transmitter-receiver apparatus 1a used opposite, has an optical connector 2 coupling between the light transmitter section 11a and the light receiver section 12a through an optical transmission line 3 such as an optical fiber. Note that the light transmitter-receiver apparatus 1a is not necessarily used in the both opposite optical transmission systems arranged opposite but satisfactorily provided in at least one thereof.

A synchronizing-signal determining section 20 has a circuit for detecting a synchronizing signal required upon extracting effective data, and a circuit for determining a detection time or the number of detections of synchronizing signals and comparing it with a predetermined reference value. Namely, with a reception electric signal from the light receiver section 12a, the synchronizing-signal determining section 20a determines that the synchronizing signals contained therein are not detected for a predetermined time or a predetermined number as a reference, and supplies a control signal for reducing the output to the light transmitter section 11a.

The light transmitter section 11a is configured mainly with a light-emitting element, such as a semiconductor laser diode, a monitor light-receiving element, a drive circuit to the light-emitting element, a light-output control circuit and so on. The drive circuit is a circuit for providing a bias current signal and modulated current signal to the light-emitting element. Namely, when a transmission electric signal is inputted from the control section (not shown) of the light transmitter-receiver apparatus 1a to the drive circuit, a modulated current signal is outputted from the drive circuit to the light-emitting element. From the light-emitting element, a transmission light signal is outputted depending upon a high or low level of the modulated current signal. The light power of the transmission light signal is always monitored by the monitor light-emitting element. The light-output control circuit adjusts the value of a bias current signal to be supplied to the light-emitting element such that the monitor light-receiving element outputs a monitor signal at a constant level. Meanwhile, when a light-power reducing signal is supplied from a synchronizing-signal determining section 20a, referred later, to the light-output control circuit, the light-output control circuit adjusts the value of a bias current signal to be supplied to the light-emitting element, to thereby decrease the light power in the transmission light signal.

The light receiver section 12a is configured mainly with a light-receiving element, a reception-signal identifying circuit and so on. When a reception light signal is inputted to the light receiver section 12a, the light receiver section 12a generates a reception current signal commensurate with a high or low level of the reception light signal. The reception-signal identifying circuit amplifies the reception current signal and carries out a given waveform-shaping process thereon, thereby converting it into a predetermined format of reception electric signal.

The synchronizing-signal determining section 20a is configured mainly with a synchronism detecting circuit, a detection numeral/time generating circuit and a comparator circuit. The comparator circuit is a circuit for comparing between the number of detections of or a detection time of synchronizing signals generated by the detection numeral/time generating circuit and the number of detections of or a detection time of synchronizing signals actually detected by the synchronism detecting circuit. Namely, when the number of detections of or a detection time of synchronizing signals does not reach a reference value, the comparator circuit outputs a light-power reducing signal to the light transmitter section 11a.

Now, explanation is made on the operation of the light transmitter-receiver apparatus 1a.

At first, in the case that a reception light signal is inputted to the light receiver section 12a and a normal reception electric signal is demodulated, the synchronizing-signal determining section 20a does not supply the foregoing light-power reducing signal to the light transmitter section 11a. Accordingly, the light transmitter section 11a outputs a transmission light signal at a light-power level in usual operation. On the other hand, in the event the optical connector 2 goes into detachment or the light transmission line 3 is broken, a reception light signal does not reach the light receiver section 12a. Naturally, this makes it impossible to normally detect a synchronizing signal on the reception electric signal. Due to this, the synchronizing-signal determining section 20a outputs a light-power reducing signal to the light transmitter section 11a. Thus, the light transmitter section 11a reduces the light-power level in a transmission light signal to be sent.

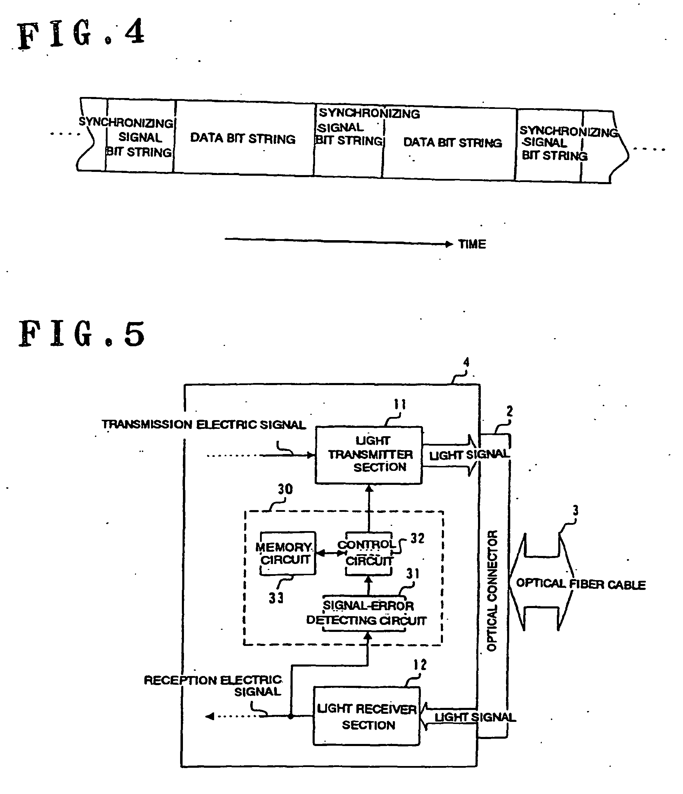

Fig. 4 shows a concept of a transmission data format including a synchronizing signal to be used in the optical transmission system of Fig. 3. In data communication, transmission data is usually inserted with synchronizing signal data having, for example, a particular bit pattern as shown in Fig. 4, in order to recognize start and end of transmission data between the transmitter-receiver apparatuses. In the synchronizing-signal determining section 20a in Fig. 3, the synchronism detecting circuit detects such a synchronizing signal. When a predetermined number of synchronizing signals are not detected within a predetermined given time by the detection numeral/time generating circuit, a light-power reducing signal as above is generated.

Namely, the light transmitter-receiver apparatus 1a includes the synchronism detecting circuit for detecting a signal abnormality occurring in the reception electric signal as an output of the light receiver section 12a and generating an abnormality detection signal, the detection numeral/time generating circuit, the comparator circuit, and the light-output control circuit for adjusting the magnitude of a transmission light signal to be outputted from the light transmitter section 11a in accordance with the abnormality detection signal.

Accordingly, when the optical connector 2 is not correctly connected or the light transmission line 3 is broken into a state there is no input of a reception light signal, the light transmitter-receiver apparatus 1a detects the state and operates toward reducing the light-power level in the transmission light signal lower than that in the usual operation. As a result, even in the event that an opening is caused on the light transmission line by a detached optical connector detachment or a broken optical fiber cable, the transmission light signal is swiftly suppressed in its light power level, hence preventing a light beam from radiating through the opening.

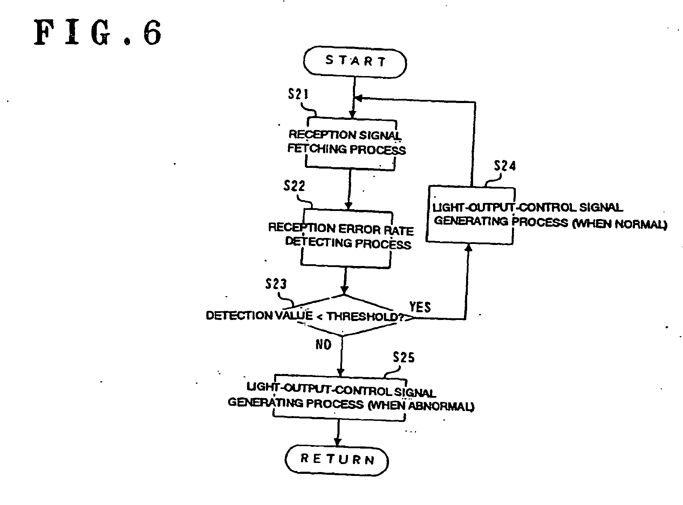

Now, explanation is made on a light transmitter-receiver apparatus 4 in a third embodiment of the invention shown in Fig. 5. Incidentally, in this embodiment, explanation is omitted concerning the environment where the light transmitter-receiver apparatus 4 is provided as well as the light transmitter section 11, light receiver section 12, optical connector 2 and optical fiber cable 3 constituting the relevant apparatus because of the similarity to the first embodiment.

An output control section 30 shown in the figure is a circuit for generating an output control signal to control the output of a light signal to be sent from the optical transmission section 11 depending upon a status of a reception signal error occurring in the reception electric signal demodulated by the light receiver section 12. This is configured mainly with a signal-error detecting circuit 31 as abnormality detecting means, a control circuit 32 as output adjusting means and a memory circuit 33.

The signal-error detecting circuit 31 is a circuit for detecting a signal error in the reception electric signal demodulated by the light receiver section 12. This notifies the control circuit 32 of an error detection state in the reception signal. The control circuit 32 is configured mainly with a microcomputer and a peripheral circuit thereof, to administer the control over the entire of the output control section 30. The memory circuit 33 is configured with a storing element such as a RAM and a ROM, and the peripheral circuit thereof. The ROM of the memory circuit 33 is stored with various programs to define the process operations of the output control section 30. The microcomputer of the control circuit 32 executes, step by step, the program synchronously with a clock signal incorporated, to thereby execute the various operation processes in the output control section 30. Meanwhile, the RAM of the memory circuit 33 is used as an area to temporarily storing various flags and operation values, in the process of such an operation process.

Now, the process operation in the output control section 30 is explained with reference to a flowchart of Fig.6. The processing program shown in the same flowchart may be started up repeatedly every time during operation of the light transmitter-receiver apparatus 4. Otherwise, it may be started up at a predetermined time interval by a timer (not shown) built in the control circuit 32. It is needless to say that this processing program is previously stored in a predetermined domain of the ROM of the memory circuit 33.

In case the processing program shown of Fig. 6 is started up at a predetermined timing, at first the signal-error detecting circuit 31 at step S21 fetches a demodulated reception electric signal outputted from the light receiver section 12. In the next step S22, it executes a detection process of error rate in the reception electric signal. For detecting signal errors in the reception electric signal, various schemes can be employed in accordance with a scheme of signal transmission between the AV control unit and the AV terminal unit that constitute an optical transmission system.

For example, reception signal error may be detected only by checking for the vertical parity or horizontal parity attached on the transmission signal. Otherwise, the signal transmission format between the both apparatuses may be previously defined in a form for data continuous transmission or inverted continuous transmission so that error can be detected at the reception side by collating the continuous transmission of data based on the transmission format. Alternatively, a ₙCᵣ error checking code, such as ₅C₂ or ₃C₁, may be contained in data and sent so that the reception side can detect an error in the reception data by use of the checking code.

The signal-error detecting circuit 31 may define an error rate based, for example, on the error bits occurring upon receiving a predetermined bit length of data, in order to digitize a detected signal error into an error rate. Otherwise, error rate may be defined by a continuing time of an error state occurring within a given time. The signal-error detecting circuit 31, when calculated such an error rate, notifies the control circuit 32 of it.

Meanwhile, where so-called an error correction code such as a Hamming code or BCH code is added to transmission data, error correction process can be made on the reception signal besides error detection in the demodulated reception signal. Accordingly, in this case, the foregoing error rate may be defined by an error correction rate as a result of an error correction of the reception signal.

Incidentally, for the signal to be sent from the AV terminal to the AV control unit (upward signal), where a data format, a signal error detection scheme or an error correction code form can be selected from a plurality of schemes, the command information about such selection may be included in a signal from the AV control unit to the AV terminal unit (downward signal).

In case the error-rate detection process at step S22 is over, the detected error rate in the reception signal is determined at the next step S23.

Namely, when at step S23 the detected error rate of reception signal is compared with a predetermined threshold and determined as being within an allowable range of the threshold, the control circuit 32 proceeds to step 24. Then, the control circuit 32 generates an output control signal for maintaining the output of a light signal to be sent from the light transmitter section 11 at a predetermined value and supplies it to the light transmitter section 11.

Thereafter, the control circuit 32 returns to the step S21, to repeat the above-explained process. Incidentally, in order to avoid the bias toward the operation with such repeated operation, the process of the control circuit 32 may be once returned to the main program (not shown) in the course of the repetition loop shown in the flowchart of Fig. 6.

On the other hand, in the case at the step S23 that the value of error rate is determined exceeding the allowable range of the predetermined threshold, it means that a light signal is not normally received at the light receiver section 12. Namely, in this case, there is a possibility that a certain trouble such as connector detachment or fiber breakage occurred in an optical connector 2 or optical fiber cable 3 constituting the optical transmission line.

For this reason, the control circuit 32 moves to step S25 where it generates an output control signal for reducing the output of a light signal to be sent from the light transmitter section 11 and supplies it to the light transmitter section 11, thus ending the process shown in Fig. 6.

Incidentally, this embodiment explained the example of simple output control that the output of a light signal to be sent from the light transmitter section 11 is reduced when a reception-signal error rate is in excess of the predetermined threshold. However, the embodiment of the invention is not limited to such a case. For example, a plurality of thresholds may be provided for the error rate of reception signals so that the power of a light signal to be outputted from the light transmitter section 11 can be decreased stepwise depending upon a stage of the threshold. Otherwise, a predetermined function may be defined between the reception-signal error rate and the power of a light signal to be emitted from the light transmitter section 11 so that the output of a light signal can be varied continuously depending upon a magnitude of error rate.

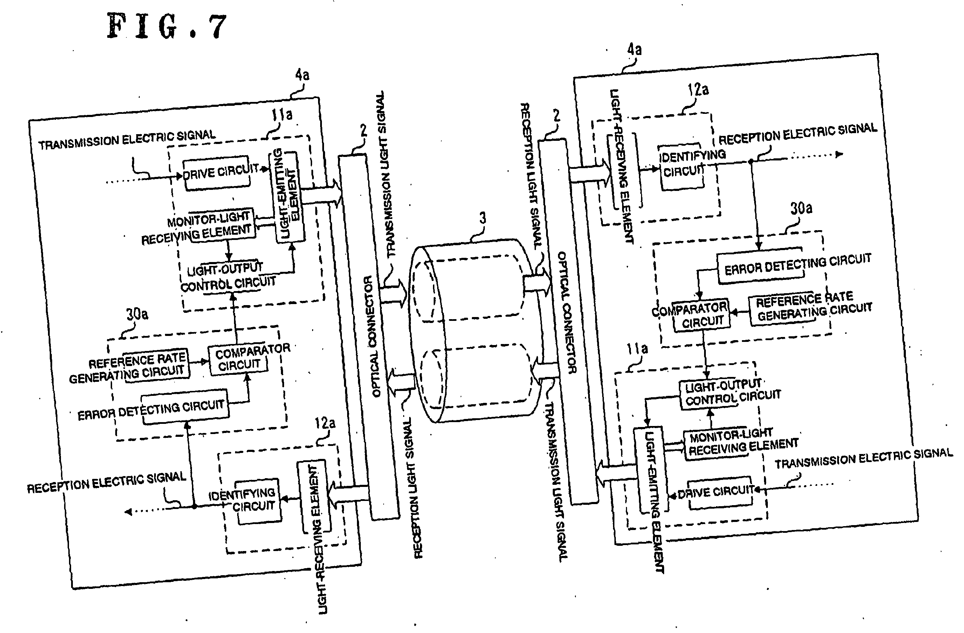

Now, explanation is made on a fourth embodiment of the invention shown in Fig. 7. This embodiment shows a case that the light transmitter-receiver apparatus explained in the third embodiment is mounted and oppositely used on a DVD recorder or on a wall-mounted television set. In the following, explanation is made on the light transmitter-receiver apparatus 4a shown in Fig. 7. Note that the light transmitter-receiver apparatus 4a is not necessarily used in both the opposite light transmission systems but satisfactorily provided on at least one thereof.

The light transmitter-receiver apparatus 4a is configured mainly with a light transmitter section 11a, a light receiver section 12a, and an error-rate determining section 30a as abnormality detecting means and output-level adjusting means. Incidentally, the other constituent elements than the error-rate determining section 30a are similar to those of the foregoing second embodiment, and hence explanation thereof is omitted.

The error-rate determining section 30a is configured mainly with an error detecting circuit, a reference-rate generating circuit and a comparator circuit.

The error detecting circuit is a circuit for calculating an error rate on the reception electric signal by computing a syndrome, etc. on the reception data. Incidentally, the error detecting circuit may include therein a function of a synchronism detecting circuit as explained in embodiment 2, to calculate an error rate including to detect a synchronizing signal in the reception electric signal. The reference-rate generating circuit is a circuit for generating an error rate value as a predefined reference. The comparator circuit is a circuit which compares an error rate detected from the reception electric signal with a predetermined error-rate reference value, thereby outputting a light-power reducing signal for reducing the output power of the transmission light signal to the light transmitter section 11a when the detection value is more deteriorated than the reference value.

For detection and correction of errors in the error detecting circuit, various schemes can be used depending upon the actual arrangement of the optical transmission system.

Where merely carrying out error detection, the scheme may be by parity check wherein horizontal or vertical parity is added to the data block to be transmitted. Otherwise, the cyclic check scheme may be employed that is enhanced in error detection accuracy by adding a plurality of redundant bits to the transmission data block.

Meanwhile, in case the error detecting circuit carries out not only error detection but also error correction, the process of error correction may be applied using a Reed-Solomon code or BCH code in the transmission data. Incidentally, where error correction is also made in the error detecting circuit, the optical transmission system requires to carry out, at data transmission side, a process of adding an error correction code to the transmission data. Namely, in the transmission control section (not shown) of the light transmitter-receiver apparatus 4, an error-correction-code adding circuit is provided to add an error correction code to the transmission electric signal, thereby carrying out a predetermined process in that circuit.

Now, explanation is made on the operation of the light transmitter-receiver apparatus 4a.

In the case that a reception light signal is inputted to the light receiver section 12a and a normal reception electric signal is demodulation-outputted from the same circuit, the error-rate determining section 30a does not supply a light-power reducing signal to the light transmitter section 11a. Hence, the light transmitter section 11a outputs a transmission light signal at a light power level in the usual operation. On the other hand, in case a trouble of detachment or disconnection occurs on the light transmission line, such as an optical connector 2 or an optical fiber cable 3, the reception light signal is prevented from being inputted to deteriorate the error rate of a reception electric signal outputted from the light receiver section 12a. As a result, a light-power reducing signal is supplied from the error-rate determining section 30a to the light transmitter section 11a, thereby reducing the light power of a transmission light signal to be outputted from the light transmitter section 11a.

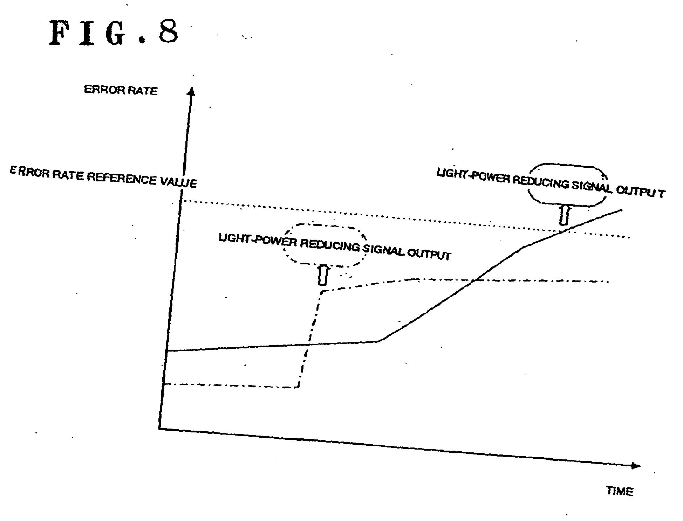

Incidentally, Fig. 8 shows a relationship between an error-rate reference value generated in the reference-rate generating circuit and an error rate calculated by the error-rate detecting circuit.

As apparent from the case about an error-rate change characteristic shown by the solid line in the figure, the error-rate determining section 30a outputs a light-power reducing signal to the light transmitter section 11a at a time that the error rate calculated by the error-rate detecting circuit deteriorates exceeding a predetermined error-rate reference value. Otherwise, the error-rate change ratio within a given time may be defined as a reference value so that a light-power reducing signal can be outputted to the light transmitter section 11a when the error-rate change ratio calculated by the error-rate detecting circuit changes exceeding the reference value, as in the error-rate change characteristic shown by the one-dot chain line in the figure. In this connection, by taking the latter scheme, the power of the light sent from the light transmitter section 11a can be reduced prior to a deterioration of the error rate to a predetermined error rate reference value.

As explained in the above, the light transmitter-receiver apparatus 4a includes the error detecting circuit for detecting a signal abnormality caused in the reception electric signal as an output of the light receiver section 12a and generating an abnormality detection signal, the reference-rate generating circuit, the comparator circuit, and the light-output control circuit for adjusting the magnitude of a transmission light signal to be outputted from the light transmitter section 11a depending upon the abnormality detection signal.

Accordingly, when the optical connector 2 is not correctly connected or the optical fiber cable 3 is broken into a state there is no input of a reception light signal, the light transmitter-receiver apparatus 4a detects such a state and operates toward reducing the light-power level of transmission light signal lower than that in the usual operation. Consequently, even in the event that an opening is caused on the light transmission line due to optical connector detachment or optical fiber cable breakage in the light transmission system, the transmission light signal is swiftly suppressed in light power level, hence preventing a light beam from radiating through the opening.

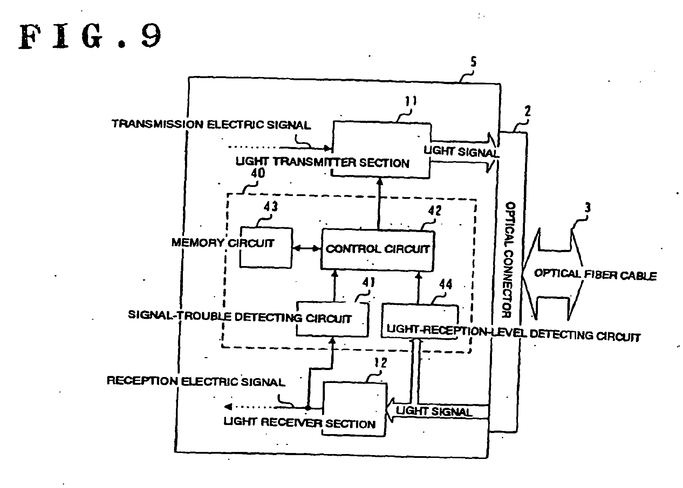

Now, explanation is made on a light transmitter-receiver apparatus 5 of a fifth embodiment of the invention shown in Fig. 9. Incidentally, in this embodiment, explanation is omitted concerning the environment where the light transmitter-receiver apparatus 5 is provided, and the light transmitter section 11 and light receiver section 12 which constitute the apparatus, optical connector 2 constituting the light transmission line and optical fiber cable 3, because of the similarity to the first embodiment.

In Fig. 9, an output control section 40 as an abnormality detecting means and output level adjusting means is a circuit for generating an output control signal to adjust the output of a light signal to be sent from the optical transmission section 11 depending upon a status of a reception electric signal demodulated by the light receiver section 12 and a light-reception level of the reception light signal. The output control section 40 is configured mainly with a signal-trouble detecting circuit 41, a control circuit 42, a memory circuit 43 and a reception-light-level detecting circuit 44.

The signal-trouble detecting circuit 41 is a circuit for detecting a trouble caused in the reception electric signal demodulated by the light receiver section 12 and notifying the situation of trouble occurrence to the control circuit 42. Incidentally, the trouble occurring in the reception electric signal represents an event that a certain trouble occurs in the demodulated reception electric signal, meaning the missing of synchronizing signals as in the first embodiment or the occurrence of reception signal error as in the second embodiment, for example. Otherwise, a trouble occurrence in the reception electric signal may be defined by a logical sum of these trouble events.

The control circuit 42 is a section configured mainly with a microcomputer and a peripheral circuit thereof, to administer the control over the entire of the output control section 40. The memory circuit 43 is configured with a storing element such as a RAM and a ROM, and a peripheral circuit thereof. The ROM of the memory circuit 43 is stored with various programs defining the process operations of the output control section 40. The microcomputer of the control circuit 42 executes, step by step, the program synchronously with a clock signal incorporated, thereby executing the various operation processes in the output control section 40. Meanwhile, the RAM of the memory circuit 43 is used as an area to temporarily store various flags and operation values, in the process of such an operation process.

The reception-light-level detecting circuit 44 is a circuit for detecting a level of the reception light signal by use of a photoelectric converter, e.g. a phototransistor or a photodiode. Incidentally, the reception-light level detected by this circuit is converted into a predetermined voltage level and notified to the control circuit 42.

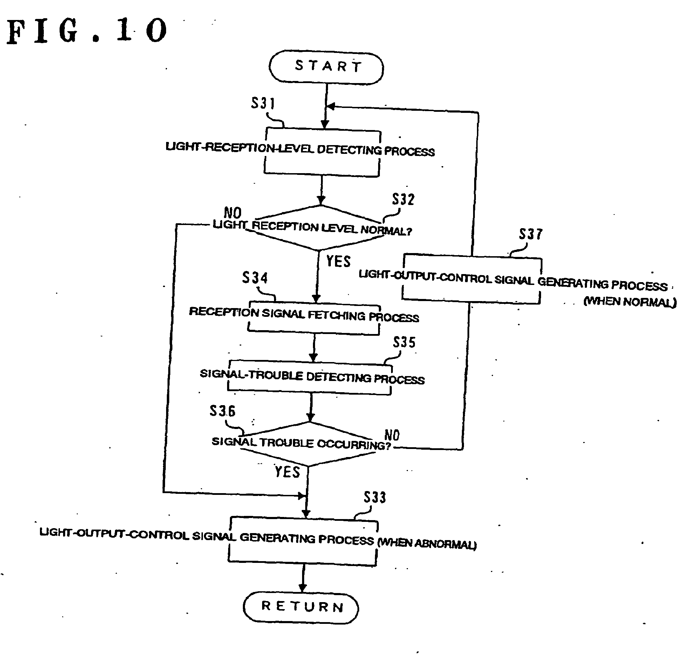

Now, the process operation of the output control section 40 shown in Fig. 9 is explained with reference to a flowchart of Fig. 10. The process program shown in the flowchart may be started up repeatedly every time during operation of the light transmitter-receiver apparatus 5. Otherwise, it may be started up at a predetermined time interval by a timer (not shown) built in the control circuit 42. It is needless to say that the processing program shown in the flowchart is previously stored in a predetermined domain of the ROM of the memory circuit 43.

In case the processing program of Fig. 10 is started up in predetermined timing, at first the reception-light-level detecting circuit 44 at step S31 detects a light-reception level of the reception light signal. In the next step S32, the control circuit 42 checks for whether the detection value is in a predetermined normal light-reception level or not.

When the light-reception level is determined not normal at the step S32, there is a possibility of an occurrence of a detachment of the optical connector 2 or a breaking in the optical fiber cable 3 in the optical transmission system. Accordingly, the control circuit 42 moves to step S33, to generate an output control signal for reducing the output of a light signal and supplies it to the light transmitter section 11, thus ending the process shown in Fig. 10.

On the other hand, when the reception-light level is determined normal at the step S32, the process moves to step S34, S35, to carry out a reception-signal fetching process and reception-signal trouble detection process by the signal-trouble detecting circuit 41.

In case it is determined at the next step S36 that a certain trouble occurs in the reception signal, the control circuit 42 moves to the step S33 where it generates an output control signal for reducing the output of a light signal and supplies it to the light transmitter section 11, thus ending the process shown in Fig. 10.

On the other hand, in case it is determined at step S36 that there is no trouble in the reception signal, the control circuit 42 proceeds to step S37. The control circuit 42 generates an output control signal for maintaining the output of a light signal from the light transmitter section 11 at a predetermined value and supplies it to the light transmitter section 11. Thereafter, the control circuit 42 returns to the step S31, to repeat the above-explained process.

Incidentally, in order to avoid the bias toward the operation with such repeated operation, the process of the control circuit 42 may be once returned to the main program (not shown) in the course of the repetition loop shown in the flowchart of Fig. 10.

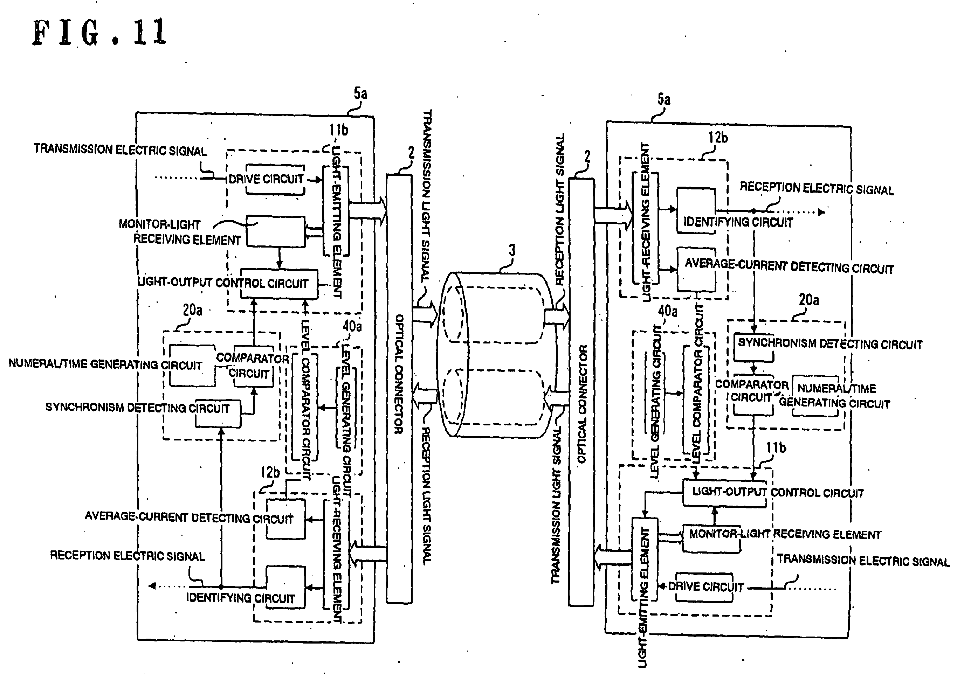

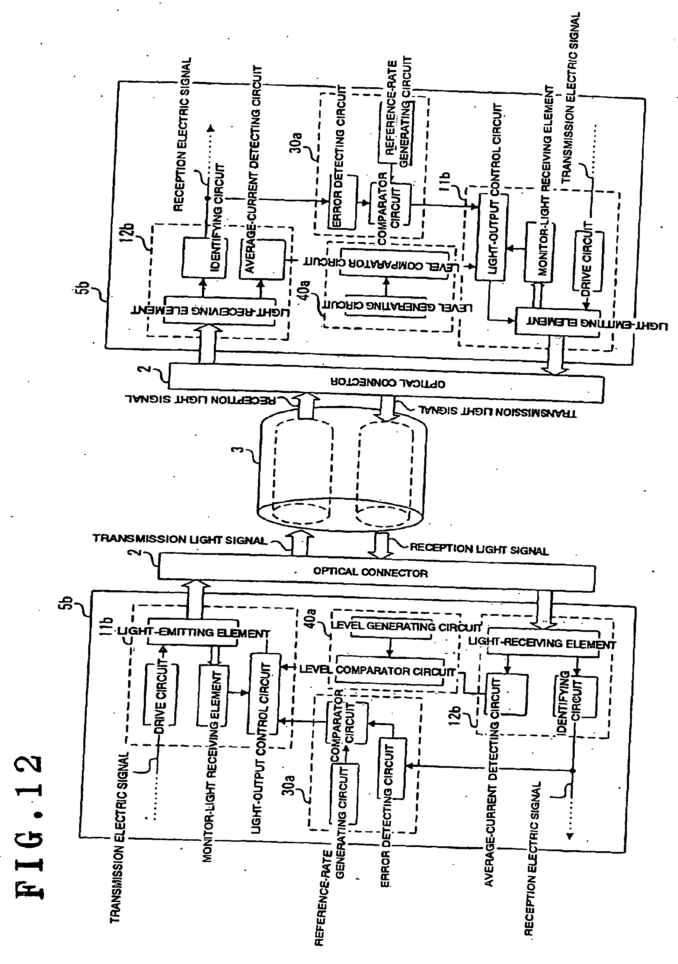

Now, explanation is made on sixth and seventh embodiments of the invention shown in Figs. 11 and 12. These embodiments show the case that the light transmitter-receiver apparatus explained in the fifth embodiment is mounted and oppositely used on a DVD recorder or on a wall-mounted television set. Meanwhile, the sixth and seventh embodiments correspond to the foregoing second and fourth embodiments, respectively.

Namely, the sixth embodiment is configured with adding such a circuit as a reception-light-level determining section 40 to the second embodiment shown in Fig. 3. Meanwhile, the seventh embodiment is configured with the similar circuit added to the fourth embodiment shown in Fig. 7. Accordingly, concerning the sixth and seventh embodiments, explanation is made only on the circuit parts added to the second and fourth embodiments.

At first, an average-current detecting circuit included in a light receiver section 12b is a circuit for extracting part of a signal converted from a reception light signal into an current signal by a light-receiving element and taking an average thereof to thereby generate a reception-light-level detection signal having a voltage level proportional to the level of light reception.

Meanwhile, the reception-light-level determining circuit 40a is configured mainly with a level comparator circuit and a level generating circuit. The level generating circuit is a circuit for generating a reference value having a voltage level corresponding to a predetermined level of light reception. Meanwhile, the level comparator circuit is a circuit for comparing between a value of a reception-light-level detection signal outputted from the average-current detecting circuit and a reference value from the level generating circuit. In the case that the value of reception-light-level detection signal goes lower than the reference value, i.e. when a trouble occur on the light transmission line and the reception-light signal level lowers, a light-power reducing signal is outputted to the light transmitter section 11b.

In the sixth embodiment shown in Fig. 11, the light-output control circuit of the light transmitter section 11b takes control to reduce the light power in the transmission light signal by taking a logical sum of a light-power reducing signal from the reception-light-level determining section 40a and a light-power reducing signal from the synchronizing-signal determining section 20a. Likewise, in the seventh embodiment shown in Fig. 12, the light-output control circuit of the light transmitter section 11b takes control to reduce the light power of the transmission light signal by taking a logical sum of a light-power reducing signal from the reception-light-level determining section 40a and a light-power reducing signal from the error-rate determining section 30a.

As explained above, the light transmitter-receiver apparatus 5a includes a synchronism detecting circuit for detecting a signal abnormality occurring on a reception electric signal as an output of the light receiver section 12b and generating an abnormality detection signal, a detection-numeral/time generating circuit, a comparator circuit, an average-current detecting circuit for detecting a level reduction of reception light of the light input signal and generating a level-reduction signal, a level comparator circuit, and a level generating circuit. Furthermore, this apparatus includes a light-output control circuit for adjusting the magnitude of a transmission light signal to be outputted from the light transmitter section 11b depending upon such an abnormality detection signal or level-reduction signal.

Likewise, the light transmitter-receiver apparatus 5b includes an error detecting circuit for detecting a signal abnormality occurring on a reception electric signal as an output of the light receiver section 12b and generating an abnormality detection signal, a reference-rate generating circuit, a comparator circuit, an average-current detecting circuit for detecting a level reduction of reception light in the light input signal and generating a level-reduction signal, a level comparator circuit, and a level generating circuit. Furthermore, this apparatus includes a light-output control circuit for adjusting the magnitude of a transmission light signal to be outputted from the light transmitter section 11b depending upon such an abnormality detection signal or level-reduction signal.

Accordingly, when the optical connector 2 is not correctly connected or the optical fiber cable 3 is broken into a state there is no input of a reception light signal, those apparatuses detect such abnormality on the light transmission line and operate toward reducing the light-power level of transmission light signal lower than that in the usual operation. As a result, even in the event that an opening is caused on the light transmission line by optical connector detachment or optical fiber cable breakage, the transmission light signal is swiftly suppressed in light power level, hence preventing a light beam from radiating through the opening.

In the embodiments of the invention, the optical fiber cable 3, used as a light transmission line of the optical transmission system, may be in a form including a plurality of pairs of signals or only one pair. Furthermore, the light transmitter-receiver apparatus of each embodiment may have a display section for displaying various pieces of information, e.g. synchronizing signal or error rate detection state, and emission light power output state.

Incidentally, in the embodiment so far explained, the functions of the output control section, the synchronizing-signal determining section and the error rate determining section may be fabricated into an IC, being integrated with other constituent elements, such as the light receiver section.

According to an embodiment, it is provided a light transmitter-receiver apparatus for detecting a trouble occurring on a light transmission line and reducing a light output. In a light transmitter-receiver apparatus including a light transmitter section for converting a transmission electric signal into a light signal and sending it, and a light receiver section for converting a light input signal into a reception electric signal, there is provided an output control section including an abnormality detecting means for detecting an abnormality occurring in a reception electric signal and an output level adjusting means for adjusting the magnitude of an output level of the light transmitter section depending upon a detection state of the signal abnormality. Signal abnormality may be detected by a missing of a synchronizing signal contained in the reception electric signal or a signal error occurring in the reception electric signal.

## Claims

1. A light transmitter-receiver apparatus including a light transmitter section (11) for converting a transmission electric signal into a light signal and sending it through an optical fiber (3), a light receiver section (12) for converting a light input signal arriving through the optical fiber into a reception electric signal, and an output control section (30) for controlling an output level at the light transmitter section depending upon a state of the reception electric signal:
wherein the output control section (30) includes
an abnormality detecting means (31) for detecting a signal abnormality occurring in the reception electric signal and generating an abnormality detection signal; and
an output level adjusting means (32) for adjusting a magnitude of the output level depending upon the abnormality detection signal,
**characterized in that**
said abnormality detecting means (31) is adapted to generate said abnormality detection signal when an error rate change ratio has exceeded a reference value.

2. A light transmitter-receiver apparatus according to claim 1, wherein the output level adjusting means (32) is adapted to adjust the magnitude of the output level, stepwise or continuously, depending upon an occurrence frequency of the abnormality detection signal.

3. A light transmitter-receiver apparatus according to claim 1, wherein the abnormality detecting means (31) is adapted to detect a missing of a synchronizing signal contained in the reception electric signal and to generate the abnormality detection signals.

4. A light transmitter-receiver apparatus according to one of claims 1 - 3, wherein the abnormality detecting means (31) is adapted to detect a signal error occurring in the reception electric signal and to generate the abnormality detection signal.

5. A light transmitter-receiver apparatus according to one of claims 1 to 4, further including a reception light level detecting means (44) for detecting a reduction in reception light level of the light input signal and generating a level reduction signal, wherein
the output level adjusting means (32) is adapted to adjust a magnitude of the output level depending upon the abnormality detection signal or the level reduction signal.

## Patentansprüche

1. Licht-Sender/Empfängervorrichtung mit einem Lichtsenderabschnitt (11) zum Umwandeln eines elektrischen Sendesignals in ein Lichtsignal und zum Senden von ihm durch ein optisches Filter (3), einem Lichtempfängerabschnitt (12) zum Umwandeln eines durch das optische Filter ankommenden Lichteingangssignals in ein elektrisches Empfangssignal und einem Ausgabesteuerabschnitt (30) zum Steuern eines Ausgangspegels beim Lichtsenderabschnitt in Abhängigkeit von einem Zustand des elektrischen Empfangssignals:
wobei der Ausgabesteuerabschnitt (30) Folgendes enthält:
eine Anormalitätserfassungseinrichtung (31) zum Erfassen einer Signalanormalität, die beim elektrischen Empfangssignal auftritt, und zum Erzeugen eines Anormalitätserfassungssignais; und
eine Ausgangspegel-Einstelleinrichtung (32) zum Einstellen einer Größe des Ausgangspegels in Abhängigkeit vom Anormalitätserfassungssignal;
**dadurch gekennzeichnet, dass**
die Anormalitätserfassungseinrichtung (31) dazu geeignet ist, das Anormalitätserfassungssignal zu erzeugen, wenn ein Fehlerratenänderungsverhältnis einen Referenzwert überschritten hat.

2. Licht-Sender/Empfängervorrichtung nach Anspruch 1, wobei die Ausgangspegel-Einstelleinrichtung (32) dazu geeignet ist, die Größe des Ausgangspegels in Abhängigkeit von einer Auftrittshäufigkeit des Anormalitätserfassungssignals stufenweise oder kontinuierlich einzustellen.

3. Licht-Sender/Empfängervorrichtung nach Anspruch 1, wobei die Anormalitätserfassungseinrichtung (31) dazu geeignet ist, ein Fehlen eines im elektrischen Empfangssignal enthaltenen Synchronisierungssignals zu erfassen und die Anormalitätserfassungssignale zu erzeugen.

4. Licht-Sender/Empfängervorrichtung nach einem der Ansprüche 1 - 3, wobei die Anormalitätserfassungseinrichtung (31) dazu geeignet ist, einen im elektrischen Empfangssignal auftretenden Signalfehler zu erfassen und das Anormalitätserfassungssignal zu erzeugen.

5. Licht-Sender/Empfängervorrichtung nach einem der Ansprüche 1 bis 4, die weiterhin eine Empfangslichtpegel-Erfassungseinrichtung (44) zum Erfassen einer Reduzierung bezüglich eines Empfangslichtpegel des Lichteingangssignals und zum Erzeugen eines Pegelreduzierungssignals enthält, wobei
die Ausgangspegel-Einstelleinrichtung (32) dazu geeignet ist, eine Größe des Ausgangspegels in Abhängigkeit vom Anormalitätserfassungssignal oder vom Pegelreduzierungssignal einzustellen.

## Revendications

1. Dispositif pour transmettre et recevoir de la lumière comprenant une section de transmission de lumière (1) pour convertir un signal électrique de transmission en un signal lumineux et l'envoyer par une fibre optique (3), une section de réception de lumière (12) pour convertir un signal lumineux en entrée arrivant par la fibre optique en un signal électrique de réception, et une section de contrôle de sortie (30) pour contrôler un niveau en sortie au niveau de la section de transmission de lumière en fonction d'un état du signal électrique de réception,
dans lequel la section de contrôle de sortie (30) comprend :
- un moyen de détection d'anomalies (31) pour détecter une anomalie de signal survenant dans le signal électrique de réception et pour générer un signal de détection d'anomalie, et
- un moyen d'ajustement de niveau en sortie (32) pour ajuster une amplitude du niveau en sortie en fonction du signal de détection d'anomalie,
**caractérisé en ce que**
ledit moyen de détection d'anomalies (31) est adapté pour générer ledit signal de détection d'anomalie quand un rapport de changement de taux d'erreur a dépassé une valeur de référence.

2. Dispositif pour transmettre et recevoir de la lumière selon la revendication 1, dans lequel le moyen d'ajustement de niveau en sortie (32) est adapté pour ajuster l'amplitude du niveau en sortie, par paliers ou en continu, en fonction d'une fréquence d'occurrence du signal de détection d'anomalie.

3. Dispositif pour transmettre et recevoir de la lumière selon la revendication 1, dans lequel le moyen de détection d'anomalies (31) est adapté pour détecter l'absence d'un signal de synchronisation contenu dans le signal électrique de réception et pour générer les signaux de détection d'anomalie.

4. Dispositif pour transmettre et recevoir de la lumière selon l'une quelconque des revendications 1 à 3, dans lequel le moyen de détection d'anomalies (31) est adapté pour détecter une erreur de signal survenant dans le signal électrique de réception et pour générer le signal de détection d'anomalie.

5. Dispositif pour transmettre et recevoir de la lumière selon l'une quelconque des revendications 1 à 4, comprenant en outre un moyen de détection de niveau lumineux de réception (44) pour détecter une réduction du niveau lumineux de réception du signal lumineux en entrée et pour générer un signal de réduction de niveau, dans lequel
le moyen d'ajustement de niveau en sortie (32) est adapté pour ajuster une amplitude du niveau en sortie en fonction du signal de détection d'anomalie ou du signal de réduction de niveau.
